Europäisches Patentamt

European Patent Office

Office européen des brevets

(11) Veröffentlichungsnummer: **0 508 178 A1**

# EUROPÄISCHE PATENTANMELDUNG

(21) Anmeldenummer: **92104835.1**

(51) Int. Cl.5: **F16M 11/04**

(22) Anmeldetag: **20.03.92**

(30) Priorität: **09.04.91 DE 4111408**

(43) Veröffentlichungstag der Anmeldung:
**14.10.92 Patentblatt 92/42**

(84) Benannte Vertragsstaaten:
**AT BE CH DE DK ES FR GB GR IT LI LU NL PT SE**

(71) Anmelder: **Rose-Elektrotechnik GmbH + Co KG Elektrotechnische Fabrik
Erbeweg 13 - 15
W-4952 Porta Westfalica(DE)**

(72) Erfinder: **Braun, Jörg
Im Wiesengrund 5**
**W-4952 Porta Westfalica(DE)**
Erfinder: **Rohlfing, Gerhard
Unterm Berge 17
W-4952 Porta Westfalica(DE)**
Erfinder: **Seligmann, Heinfred
Hammer Kirchweg 23
W-3079 Uchte(DE)**
Erfinder: **Pohlmann, Franz F.
Pappelweg 6
W-4950 Minden(DE)**

(74) Vertreter: **Hanewinkel, Lorenz, Dipl.-Phys.
Patentanwalt Ferrariweg 17a
W-4790 Paderborn(DE)**

(54) **Tragarm für Computergeräte.**

(57) Der Tragarm (1) für Computergeräte, wie Steuergehäuse, Steuertafeln od. dgl., ist an einem Längenende über ein Anschlußstück (2) mit einem Wand- oder Aufsatzgelenk mit/ohne zwischengeschaltetem Zwischengelenk verbunden und hat am anderen Längenende eine Aufhängung (3) für das Computergerät. Dieser Tragarm (1) ist mit seiner Aufhängung (3) unter Beibehaltung einer vertikalen Aufhängungslage gegenüber einem wand- oder aufsatzgelenkseitigen Lagerbock (4) durch eine im Tragarm (1) angeordnete Teleskopeinheit (5) mit Kraftgeber (6), vorzugsweise Gasfeder, in einem begrenzten Hub höhenverschwenkbar und dabei bildet die Teleskopeinheit (5) mit dem Tragarm (1) ein in der Tragkraft einstellbares Kraftdreieck (13, 9, 14) bei konstantem Kraftgeberdruck auf dem gesamten Hub.

Die Teleskopeinheit (5) läßt sich mit einer bei Störungen im Kraftgeber (6) wirksam werdenden Sicherheitskupplung (29) ausstatten.

Fig.1

Die Erfindung bezieht sich auf einen Tragarm für Computergeräte wie Steuergehäuse, Steuertafeln o. dgl., welche an einem Längenende mit einem Wand- oder Aufsatzgelenk mit/ohne zwischengeschaltetem Zwischengelenk verbunden ist und am anderen Längenende eine Aufhängung für das Computergerät hat.

Die bisher auf dem Markt befindlichen Computer-Tragarme haben immer eine bestimmte Einstellung in der waagerechten oder schrägstehenden Lage, so daß sie nicht auf unterschiedliche Bedienungshöhen eingerichtet werden können.

In der Medizin sind höhenverstellbare Tragarme für medizinische Geräte bekannt, die mit Parallelogrammhebeln arbeiten, so daß sich bei der Höhenverstellung die Belastbarkeit ständig ändert, und die zusätzlich deshalb eine Feststellung für die jeweilige Lage erfordern.

Diese Tragarme sind für Computergeräte aufgrund ihrer Ausführung in der Tragfähigkeit nicht geeignet.

Aufgabe der Erfindung ist es, einen nach der eingangs genannten Art aufgebauten Tragarm für Computergeräte zu schaffen, der bei einfachem Aufbau und leichter Handhabung stufenlos in einem begrenzten Bereich höhenverstellbar und in der eingestellten Lage selbsthemmend ausgebildet ist, in seiner Tragfähigkeit auf die verschiedenen Computergeräte eingestellt werden kann und auf seinem gesamten Verstellweg immer die gleiche Belastbarkeit hat.

Diese Aufgabe wird erfindungsgemäß durch die kennzeichnenden Merkmale des Patentanspruches 1 gelöst, wobei die in den einzelnen Unteransprüchen aufgeführten Gestaltungsmerkmale vorteilhafte Weiterbildungen der Aufgabenlösung darstellen.

Der erfindungsgemäße Tragarm für Computergeräte ist einfach aufgebaut und leicht zu handhaben und ermöglicht in einem begrenzten Hub ein stufenloses Einstellen auf die jeweilige Bedienungslage, und zwar dabei von einer obersten angehobenen Stellung über eine waagerechte Stellung bis eine unterste abgesenkte Stellung; es sind dabei in diesem begrenzten Hub die verschiedensten Stellungen einrichtbar und in jeder Stellung ist der Tragarm selbsthemmend ausgebildet, so daß die eingestellte Stellung immer bestehen bleibt.

Dieser Tragarm arbeitet mit einer Teleskopeinheit und einem Kraftdreieck, welches in der Belastbarkeit, d.h. Tragfähigkeit von einer minimalen bis einer maximalen Belastung stufenlos einstellbar ist und dabei das eingestellte Kraftdreieck immer seine Größe und somit die eingestellte Tragfähigkeit beibehält. Die Teleskopeinheit arbeitet mit einer Gasfeder, die auf dem gesamten Einstellweg mit konstantem Druck arbeitet.

Weiterhin soll der Tragarm bei Ausfall der Gasfeder gegen Absinken und somit plötzliches Herunterfallen automatisch gesichert sein, was durch die Sicherheitskupplung in Form einer Dreibackenkupplung gelöst wird, die in Abhängigkeit vom nachlassenden Druck in der Gasfeder bzw. beim Ausfall der Gasfeder sofort und automatisch zur Wirkung kommt. Der gesamte Tragarm mit Teleskopeinheit, Kraftdreieck und Sicherheitskupplung ist einfach und kostengünstig aufgebaut und läßt sich aufgrund des Kraftdreieckes und der Teleskopeinheit in einem verhältnismäßig großen Belastungsbereich somit für die unterschiedlich schweren Computergeräte an einem Arbeitsplatz einsetzen und dabei mit wenigen Handgriffen und geringem Kraftaufwand auf die jeweilige Position einstellen.

Anhand der Zeichnungen wird nachfolgend ein Ausführungbeispiel gemäß der Erfindung näher erläutert. Es zeigt:

Fig. 1 einen vertikalen Längsschnitt durch einen mittels einer Teleskopeinheit vertikal verschwenkbaren Tragarm in horizontaler Stellung,

Fig. 2 einen vertikalen Längsschnitt durch den Tragarm in angehobener Stellung,

Fig. 3 einen vertikalen Längsschnitt durch den Tragarm in abgesenkter Stellung,

Fig. 4 einen horizontalen Längsschnitt durch den Tragarm,

Fig. 5 einen vertikalen Längsschnitt durch ein Längenende der Teleskopeinheit mit Gasfeder und Schubstangenfestlegung,

Fig. 6 einen horizontalen Längsschnitt durch dasselbe Längenende der Teleskopeinheit in gegenüber Fig. 5 verschobener Gasfederstellung,

Fig. 7 einen Längsschnitt durch eine Sicherheitskupplung der Teleskopeinheit gemäß Ausschnitt X in Fig. 1 in Nichtfunktionsstellung der Kupplung,

Fig. 8 einen Längsschnitt durch dieselbe Kupplung in Blockierstellung,

Fig. 9 einen Querschnitt durch die Kupplung mit Blockierbacken gemäß der Schnittlinie I-I in Fig. 8,

Der Tragarm (1) für Computergeräte, wie Steuergehäuse, Steuertafeln o. dgl., ist an einem Längenende über ein Anschlußstück (2) mit einem Wand- oder Aufsatzgelenk mit/ohne zwischengeschaltetem Zwischengelenk verbunden und hat am anderen Längenende eine Aufhängung (3) für das Computergerät.

Dieser Tragarm (1) ist mit seiner Aufhängung (3) unter Beibehaltung einer vertikalen Aufhängungslage gegenüber einem Wand- oder aufsatzgelenkseitigen Lagerbock (4) durch eine im Tragarm (1) angeordnete Teleskopeinheit (5) mit Kraftgeber (6) in einem begrenzten Hub höhenverschwenkbar und dabei bildet die Teleskopeinheit (5) mit dem Tragarm (1) ein in der Tragkraft einstellbares Kraftdreieck (13, 9, 14) bei konstantem Kraftgeberdruck auf dem gesamten Hub.

In bevorzugter Weise ist der Kraftgeber (6) von einer Gasfeder gebildet.

Der Tragarm (1) weist zwei übereinanderliegende in vier Schwenkachsen (7,8,9,10) parallelogrammartig gegeneinander verschieb- und verschwenkbare Armprofile (11,12) auf, von denen jedes Armprofil (11,12) mit einer Schwenkachse (7,9) am Lagerbock (4) gehalten ist und in der anderen Schwenkachse (8,10) die Aufhängung (3) trägt.

Die in den beiden Armprofilen (11,12) angeordnete Teleskopeinheit (5) ist in einer ersten Schwenkachse (13) mittelbar am Lagerbock (4) und in einer zweiten Schwenkachse (14) an einem Armprofil (12), vorzugsweise dem unteren Armprofil (12), verschwenkbar und in sich längenverschiebbar gelagert.

Beide Schwenkachsen (13,14) der Teleskopeinheit (5) bilden mit der am Lagerbock (4) angeordneten Schwenkachse (9) des unteren Armprofiles (12) das Kraftdreieck und dabei ist die lagerbockseitige erste Schwenkachse (13) der Teleskopeinheit (5) zur Tragkrafteinstellung gegenüber der unteren Schwenkachse (9) des Armprofiles (12) stufenlos höhenverstellbar im Lagerbock (4) gehalten.

In dem von einem U-Profil gebildeten Lagerbock (4) ist eine vertikale Gewindespindel (15) verdrehbar gelagert und die erste Schwenkachse (13) der Teleskopeinheit (5) wird in einer Lagergabel (16) gehalten, welche um die Gewindespindel (15) faßt und bei Gewindespindelverdrehung mit der ersten Schwenkachse (13) zur Kraftdreieckeinstellung zwischen den beiden lagerbockseitigen Schwenkachsen (7,9) der Armprofile (11,12) stufenlos höhenverstellt (-verschoben) wird.

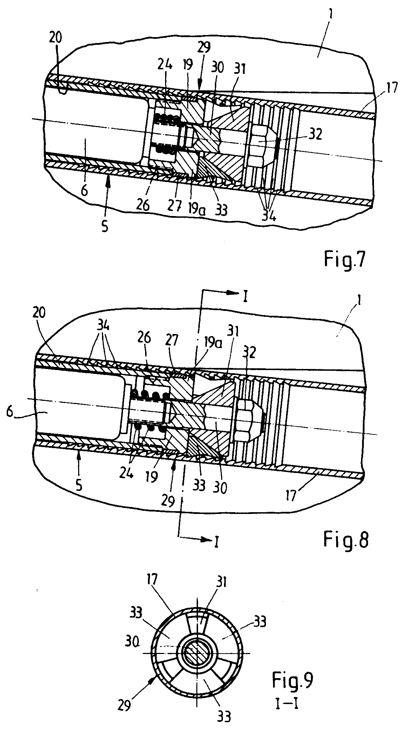

Die Teleskopeinheit (5) weist ein mit einem Längenende im aufhängungsseitigen Endbereich des unteren Armprofiles (12) in der Schwenkachse (14) gelagertes Führungsrohr (17) auf, in dem ein die Gasfeder (6) in sich aufnehmendes und zwischen zwei endseitigen Führungskolben (18,19) haltendes Gleitrohr (20) verschiebbar lagert; dieses Gleitrohr (20) ist über mindestens eine Schubstange (21) mit der lagerbockseitigen, höhenverstellbaren Schwenkachse (13) verbunden und die Kolbenstange (22) der Gasfeder (6) ist in einem Verbindungs- und Durchführlager (23) des Führungsrohres (17) befestigt. Die Gasfeder (6) wird in dem Gleitrohr (20) zwischen den beiden Führungskolben (18,19) unter Zwischenschaltung einer Druckfeder (24) -vgl. insbesondere Fig. 7 und 8- eingespannt gehalten.

Das Verbindungs- und Durchführlager (23) ist im freiliegenden, dem Lagerbock (4) zugewandten Längenende des Führungsrohres (17) festgelegt, hält in einem Bolzen (25) das freie Ende der den Führungskolben (18) durchfassenden Gasfeder-Kolbenstange (22) fest und wird von zwei, einenends mit der Schwenkachse (13) und anderenends mit dem Führungskolben (18) verbunden Schubstangen (21) durchfaßt.

Die beiden Führungskolben (18,19) sind in die beiden Längenenden des Gleitrohres (20) eingeschraubt (Gewinde 26) und liegen mit aus dem Gleitrohr (20) herausragenden Kolbenteilen (18a,19a) und Gleitlagern (27) verschiebbar am Führungsrohr (17) innenseitig an.

Die beiden Schubstangen (21) verlaufen parallel zur Gasfeder-Kolbenstange (22) beiderseits derselben, sind mit einem Längenende in den Führungskolben (18) eingeschraubt und mit dem anderen Längenende mit der in der Lagergabel (16) gehaltenen Schwenkachse (13) durch Steck-Schraubverbindung (28) verbunden.

Die Gewindespindel (15) zeigt an ihrem oberen Längenende einen Werkzeugansatz (15a) zur Gewindespindelverdrehung.

Die Teleskopeinheit (5) ist mit einer im Führungsrohr (17) angeordneten, dem Gleitrohr (17) zugeordneten und mit der Gasfeder (6) verbundenen, bei Kraftab- oder -ausfall der Gasfeder (6) blockierend mit dem Führungsrohr (17) zusammenwirkenden und den Tragarm (1) in der eingestellten Höhenlage festhaltenden (blockierenden) Sicherheitskupplung (29) ausgerüstet.

Diese Sicherheitskupplung (29) ist als im der Aufhängung (3) benachbarten Längenendbereich des Führungsrohres (17) angeordnete, mit einem axialen Gasfederbolzen (30) unter Federbelastung (24) verbundene Dreibacken-Sicherheitskupplung ausgebildet (vgl. Fig. 7 bis 9).

Um den Gasfederbolzen (30) liegt die sich zwischen Gasfeder(6) und Führungskolben (19) abstützende, von der Gasfeder (6) vorgespannte Druckfeder (24).

Der Gasfederbolzen (30) durchfaßt einen Spannkonus (31) und liegt mit einem Bund (32), wie Scheibe und Mutter, hinter dem Spannkonus (31).

Um den Spannkonus (31) sind drei vom Spannkonus (31) bei konstantem Druck der Gasfeder (6) freigegebene und bei Druck-Ab- oder -Ausfall der Gasfeder (6) durch axiale Verschiebung des Gasfederbolzens (30) und Spannkonus (31) durch die Druckfeder (24) radial nach außen spreizbare Blockierbacken (33) angeordnet, die in der Blockierstellung mit einer auf dem Verschiebebereich des Gleitrohres (20) mit Gasfeder (6) im Führungsrohr (17) vorgesehenen Verzahnung (34) zusammenwirken.

Die beiden Armprofile (11,12) sind von U-Profilen gebildet, die mit ihren U-Öffnungen und somit U-Schenkeln (11a, 12 a) zur Bildung eines geschlossenen Tragarmes (1) übereinandergreifen und in den U-Schenkeln (11a,12a) die Schwenkachsen (7 bis 10) aufnehmen.

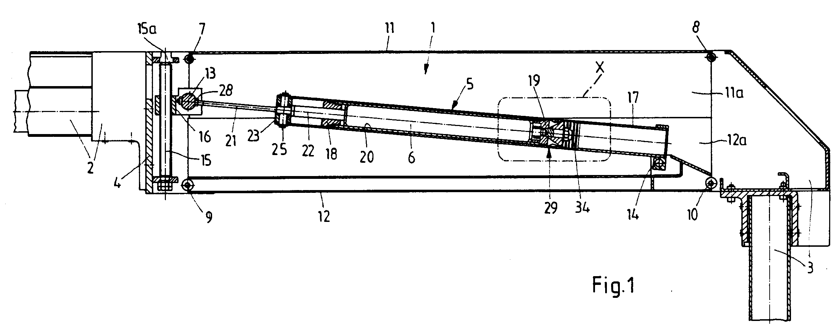

In Fig. 1 liegt der Tragarm (1) in waagerechter Lage bei mittlerer Belastung; durch Verdrehen der Gewindespindel (15) ist die Lagergabel (16) mit der ersten Schwenkachse (13) nach unten verstellt worden, und zwar in die mittlere Tragfähigkeit des Tragarmes (1) und der Teleskopeinheit (5).

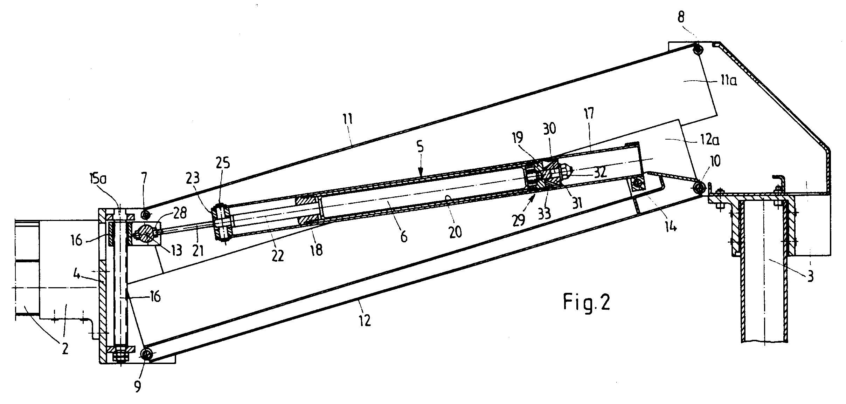

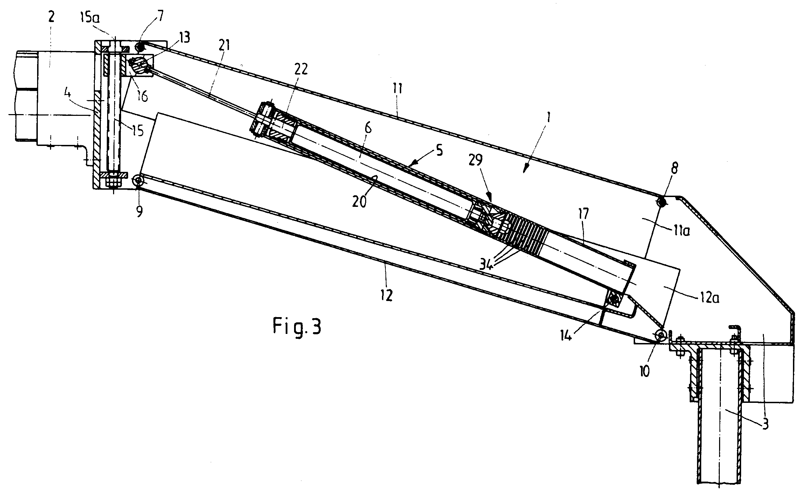

In Fig. 2 ist der Tragarm (1) in die angehobene Stellung und in Fig. 3 in die abgesenkte Stellung seiner Aufhängung (3) gezeigt und zwar in beiden Stellungen bei maximaler Belastung, in dem die Gewindespindel (15) die Lagergabel (16) mit der ersten Schwenkachse (13) in die oberste Stellung verschoben hat und das größte Kraftdreieck (13,9,14) gebildet ist.

Destoweiter die Gewindespindel (15) die Lagergabel (16) mit der ersten Schwenkachse (13) nach unten verschiebt, umso flacher wird das Kraftdreieck (13,9,14) und dabei nimmt die Belastung (Tragfähigkeit) ab.

Beispielsweise ist eine Tragkrafteinstellung von 80 N bis 850 N möglich; liegt die Lagergabel (16) in der untersten Stellung, dann ist die minimale Belastung von z.B. 80 N und ist die Lagergabel (16) in die oberste Stellung hochgefahren worden (Fig. 2 und 3), dann hat der Tragarm (1) eine maximale Belastung von z.B. 850 N.

Beim stufenlosen Auf- und Abschwenken des Tragarmes (1) in die gewünschte Lage behält das eingestellte Kraftdreieck (13,9,14) seine Größe bei und die Gasfeder (6) hat dabei immer konstanten Druck, so daß der Tragarm (1) mit Computergerät in jeder Lage selbsthemmend gehalten wird. Beim Höhenverstellen und konstantem Druck in der Gasfeder (6) hält diese die Druckfeder (24) gespannt und den Gasfederbolzen (30) axial nach außen verschoben, so daß sein Bund (32) den Spannkonus (31) nicht beaufschlagt und dieser die Blockierbacken (33) ebenfalls nicht spreizt, so daß sie in die Freigabestellung gemäß Fig. 7 eingefahren sind und die Kupplung (29) hat keine Wirkung, sondern verschiebt sich mit der Gasfeder (6) im Führungsrohr (17).

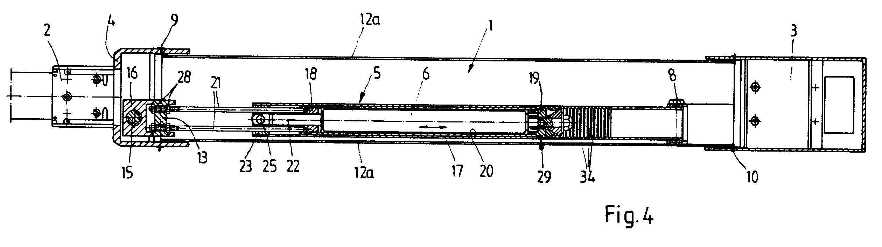

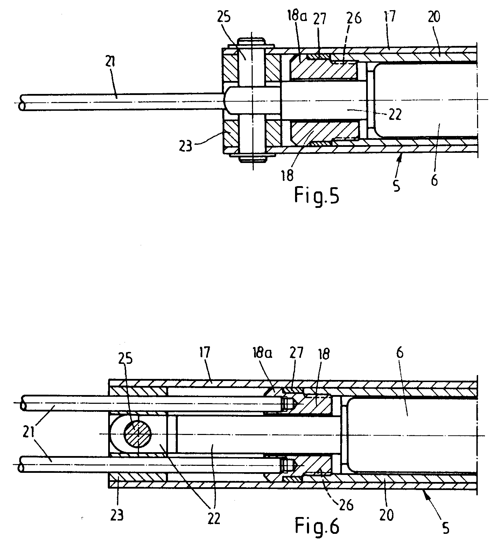

Wie aus Figur 1 bis 6 ersichtlich, verschiebt sich beim Verstellen des Tragarmes (1) das Gleitrohr (20) mit Gasfeder (6) in dem Führungsrohr (17), da die Schubstangen (21) den Führungskolben (18) im Führungsrohr (17) beaufschlagen (verschieben) und dabei die Kolbenstange (22) der Gasfeder (6) in dieselbe hineingeschoben bzw. aus derselben herausgezogen wird, wobei der konstante Druck der Gasfeder (6) beibehalten bleibt und die Gasfeder (6) ihre eingespannte Lage zwischen den Führungskolben (18,19) behält. Die Gasfeder (6) wird also beim Tragarmverstellen durch die Längenänderung des Dreieckschenkels innerhalb der Teleskopeinheit (5) im Führungsrohr (17) mit ihrem Gleitrohr (20) hin- und hergeschoben und die dabei zwangsläufig mitbewegte Kolbenstange (22) gleicht die Verschiebebewegungen aus.

Sollte einmal der Druck in der Gasfeder (6) nachlassen oder die Gasfeder (6) total ausfallen, dann wird die Sicherheitskupplung (29) wirksam, so daß der Tragarm (1) am Computergerät nicht plötzlich nach unten fallen kann.

Die Gasfeder (6) hat dann keine ausreichende, die Feder (24) gespannt haltende Kraft, und die Kraft der Feder (24) wird größer, die dann den Gasfederbolzen (30) in axialer Richtung auf die Gasfeder (6) zieht, wodurch der Bund (32) am Spannkonus (31) zur Anlage kommt und diesen ebenfalls in Richtung Gasfeder (6) drückt, welcher bei dieser Verschiebung die Blockierbacken (33) radial nach außen spreizt und dabei kommen die Backen (33) mit der Verzahnung (34) des Führungsrohres (17) in Eingriff und dadurch wird der Tragarm (1)sofort in seiner Lage festgehalten (Fig.8).

Die Sicherheitskupplung (29) kann auf dem gesamten Verschiebeweg der Gasfeder (6) wirksam werden und in jeder Stellung dann mit der Verzahnung (34) zusammenwirken, da die Verzahnung (34) auf der Länge des Führungsrohres (17) angeordnet ist, die dem Gasfeder-Verschiebeweg entspricht.

Bei einer weiteren bevorzugten Ausführung kann zusätzlich zur oder anstelle der Sicherheitskupplung (29) in einer Schwenkachse (8,10), beispielsweise der Schwenkachse (10) eine Reibbremse eingesetzt sein, die dann bei Ausfall der Gasfeder (6) eigenständig wirkt bzw. eine zusätzliche Sicherung darstellt.

**Patentansprüche**

1. Tragarm für Computergeräte, wie Steuergehäuse, Steuertafeln o. dgl., welcher an einem Längende mit einem Wand- oder Aufsatzgelenk mit/ohne zwischengeschaltetem Zwischengelenk verbunden ist und am anderen Längenende eine Aufhängung für das Computergerät hat, dadurch gekennzeichnet, daß derselbe mit seiner Aufhängung (3) unter Beibehaltung einer vertikalen Aufhängungslage gegenüber einem wand- oder aufsatzgelenkseitigen Lagerbock (4) durch eine im Tragarm (1) angeordnete Teleskopeinheit (5) mit Kraftgeber (6) in einem begrenzten Hub höhenverschwenkbar ist und dabei die Teleskopeinheit (5) mit dem Tragarm (1) ein in der Tragkraft einstellbares Kraftdreieck (13,9,14) bei konstantem Kraftgeberdruck auf dem gesamten Hub bildet.

2. Tragarm nach Anspruch 1, dadurch gekennzeichnet, daß der Kraftgeber (6) von einer Gasfeder gebildet ist.

3. Tragarm nach Anspruch 1 und 2, dadurch gekennzeichnet, daß derselbe zwei übereinanderliegende in vier Schwenkachsen (7,8,9,10) parallelogrammartig gegeneinander verschieb- und verschwenkbare Armprofile (11,12) aufweist, von denen jedes Armprofil (11,12) mit einer Schwenkachse (7,9) am Lagerbock (4) gehalten ist und in der anderen Schwenkachse (8,10) die Aufhängung (3) trägt.

4. Tragarm nach einem der Ansprüche 1 bis 3, dadurch gekennzeichnet, daß die in den beiden Armprofilen (11,12) angeordnete Teleskopeinheit (5) in einer ersten Schwenkachse (13) mittelbar am Lagerbock (4) und in einer zweiten Schwenkachse (14) an einem Armprofil (11 oder 12), vorzugsweise dem unteren Armprofil (12) verschwenkbar und in sich längenverschiebbar gelagert ist.

5. Tragarm nach einem der Ansprüche 1 bis 4, dadurch gekennzeichnet, daß die beiden Schwenkachsen (13,14) der Teleskopeinheit (5) mit der am Lagerbock (4) angeordneten Schwenkachse (9) des unteren Armprofiles (12) das Kraftdreieck bilden und dabei die lagerbockseitige erste Schwenkachse (13) der Teleskopeinheit (5) zur Tragkrafteinstellung gegenüber der unteren Schwenkachse (9) des Armprofiles (12) stufenlos höhenverstellbar im Lagerbock (4) gehalten ist.

6. Tragarm nach einem der Ansprüche 1 bis 5, dadurch gekennzeichnet, daß im Lagerbock (4) eine vertikale Gewindespindel (15) verdrehbar gelagert ist und die erste Schwenkachse (13) der Teleskopeinheit (5) in einer Lagergabel (16) gehalten ist, welche um die Gewindespindel (15) faßt und bei Gewindespindelverdrehung mit der ersten Schwenkachse (13) zur Kraftdreieckeinstellung zwischen den beiden lagerbockseitigen Schwenkachsen (7,9) der Armprofile (11,12) stufenlos höhenverschiebbar ist.

7. Tragarm nach einem der Ansprüche 1 bis 6, dadurch gekennzeichnet, daß die Teleskopeinheit (5) ein mit einem Längenende im aufhängungsseitigen Endbereich des unteren Armprofiles (12) in der Schwenkachse (14) gelagertes Führungsrohr (17) aufweist, in dem ein die Gasfeder (6) in sich aufnehmendes und zwischen zwei endseitigen Führungskolben (18,19) haltendes Gleitrohr (20) verschiebbar lagert, wobei dieses Gleitrohr (20) über mindestens eine Schubstange (21) mit der lagerbockseitigen, höhenverstellbaren Schwenkachse (13) verbunden und die Kolbenstange (22) der Gasfeder (6) in einem Verbindungs- und Durchführlager (23) des Führungsrohres (17) befestigt ist.

8. Tragarm nach einem der Ansprüche 1 bis 7, dadurch gekennzeichnet, daß die Gasfeder (6) in dem Gleitrohr (20) zwischen den beiden Führungskolben (18,19) unter Federspannung, vorzugsweise unter Zwischenschaltung einer Druckfeder (24) eingespannt gehalten ist.

9. Tragarm nach einem der Ansprüche 1 bis 8, dadurch gekennzeichnet, daß der Verbindungs- und Durchführlager (23) im freiliegenden dem Lagerbock (4) zugewandten Längenende des Führungsrohres (17) festgelegt ist, in einem Bolzen (25) das freie Ende der den Führungskolben (18) durchfassenden Gasfeder-Kolbenstange (22) hält und von zwei einenends mit der Schwenkachse (13) und anderenends mit dem Führungskolben (18) verbundenen Schubstangen (21) durchfaßt ist.

10. Tragarm nach einem der Ansprüche 1 bis 9, dadurch gekennzeichnet, daß die beiden Führungskolben (18,19) in die beiden Längenenden des Gleitrohres (20) eingeschraubt (26) sind und mit aus dem Gleitrohr (20) herausragenden Kolbenteilen (18a,19a) und Gleitlagern (27) verschiebbar im Führungsrohr (17) anliegen.

11. Tragarm nach einem der Ansprüche 1 bis 10, dadurch gekennzeichnet, daß die beiden Schubstangen (21) parallel zur Gasfeder-Kolbenstange (22) beiderseits derselben verlaufen, mit einem Längenende in den Führungskolben (18) eingeschraubt und mit dem anderen Längenende mit der in der Lagergabel (16) gehaltenen Schwenkachse (13) durch Steck-Schraubverbindung (28) verbunden sind.

12. Tragarm nach einem der Ansprüche 1 bis 11, dadurch gekennzeichnet, daß die Gewindespindel (15) an ihrem oberen Längenende einen Werkzeugansatz (15a) zur Gewindespindelverdrehung hat.

13. Tragarm nach einem der Ansprüche 1 bis 12, gekennzeichnet durch eine im Führungsrohr (17) angeordnete, dem Gleitrohr (20) zugeordnete und mit der Gasfeder (6) verbundene, bei Kraftab- oder -ausfall der Gasfeder (6) blockierend mit dem Führungsrohr (17) zusammenwirkende und den Tragarm (1) in der eingestellten Höhenlage festhaltende (blockierende) Sicherheitskupplung (29).

14. Tragarm nach einem der Ansprüche 1 bis 13, dadurch gekennzeichnet, daß die Sicherheitskupplung (29) als im der Aufhängung (3) benachbarten Längenendbereich des Führungsrohres (17) an@geordnete, mit einem axialen Gasfederbolzen (30) der Gasfeder (6) unter Federbelastung verbundene Dreickbacken-Sicherheitskupplung ausgebildet ist.

15. Tragarm nach einem der Ansprüche 1 bis 14, dadurch gekennzeichnet, daß um den Gasfederbolzen (30) die sich zwischen Gasfeder (6) und Führungskolben (19) abstützende, von der Gasfeder (6) vorgespannte Druckfeder (24) angeordnet ist, der Gasfederbolzen (30) einen Spannkonus (31) durchfaßt und mit einem Bund (32) hinter dem Spannkonus (31) liegt, um den Spannkonus (31) drei vom Spannkonus (31) bei konstantem Druck der Gasfeder (6) freigegebene und bei Druck-Ab- oder -Ausfall der Gasfeder (6) durch axiale Verschiebung des Gasfederbodens (30) und Spannkonus (31) durch die Druckfeder (24) radial nach außen spreizbare Blockierbacken (33) angeordnet sind, die in der Blockierstellung mit einer auf dem Verschiebebereich des Gleitrohres (20) mit Gasfeder (6) im Führungsrohr (17) vorgesehenen Verzahnung (34) zusammenwirken.

16. Tragarm nach einem der Ansprüche 1 bis 15, dadurch gekennzeichnet, daß die beiden Armprofile (11,12) von U-Profilen gebildet sind, die mit ihren U-Öffnungen und den U-Schenkeln (11a, 12a) zur Bildung eines geschlossenen Tragarmes (1) übereinandergreifen und in den U-Schenkeln (11a, 12a) die Schwenkachsen (7 bis 10) aufnehmen.

Fig.1

Fig.2

Fig. 3

EP 0 508 178 A1

Fig. 4

Fig.5

Fig.6

Fig.7

Fig.8

Fig.9
I—I

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 048 404 (ZEISS)<br>* Seite 4, Zeile 20 - Seite 5, Zeile 13; Figuren 3,4 *<br>--- | 1,3,4,5 ,6,12, 16 | F 16 M 11/04 |
| X | US-A-4 166 602 (NILSEN)<br>* Spalte 3, Zeile 25 - Spalte 4, Zeile 63; Figuren 4-9 *<br>--- | 1,2,3,4 ,5,6,12 | |
| X | GB-A-2 230 946 (MICROCOMPUTER ACCESSORIES)<br>* Seite 7, Zeile 13 - Seite 11, Zeile 17; Figur 1 * | 1,2,3,4 ,5 | |
| A | ----- | 16 | |

**RECHERCHIERTE SACHGEBIETE (Int. Cl.5)**

F 16 M

Der vorliegende Recherchenbericht wurde für alle Patentansprüche erstellt

| Recherchenort | Abschlußdatum der Recherche | Prüfer |
|---|---|---|
| DEN HAAG | 03-07-1992 | BARON C. |